# EUROPEAN PATENT APPLICATION

(11) **EP 4 375 396 A1**
(43) Date of publication of application: **29.05.2024**
(21) Application number: 23181981.4
(22) Date of filing: 28.06.2023
(51) Int. Cl.: C23G 1/34, H01M 4/13, C23G 3/02, C23G 5/024, C23G 5/04

(54) **REMOVAL METHOD APPLIED TO ALUMINUM ELECTRODE SHEET WITH OXIDE LAYER**

(30) Priority: 23.11.2022 TW 111144713
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); YANG, Chun-Chieh, 821 Kaohsiung City (TW); CHEN, Shih-Min, 821 Kaohsiung City (TW)
(74) Representative: Becker, Eberhard

(57) **Abstract**

A removal method applied to an aluminum electrode sheet (100) with an oxide layer (110), including a soaking step. The soaking step includes soaking the aluminum electrode sheet (100) in an ionic liquid to remove the oxide layer (110), such that the aluminum electrode sheet (100) has an exposed part (120) of aluminum metal, and the soaking step is performed in a nitrogen atmosphere.

## Description

### BACKGROUND

### Technical Field

The disclosure relates to a removal method, and more particularly to a removal method applied to an aluminum electrode sheet with an oxide layer.

### Description of Related Art

Generally, aluminum electrode sheets are surface-treated with acidic solutions (e.g., hydrochloric acid, sulfuric acid, nitric acid, etc.). However, this type of surface treatment tends to leave residual moisture, which can have a negative impact on subsequent applications. Moreover, the aforementioned surface treatment is often carried out in an atmospheric environment. Due to the easily oxidized nature of aluminum electrode sheets, even after surface treatment, an oxide layer can easily form again, making it difficult to effectively remove the oxide layer from the aluminum electrode sheet.

### SUMMARY

The disclosure provides a removal method applied to an aluminum electrode sheet with an oxide layer, which may effectively remove the oxide layer from the aluminum electrode sheet while reducing the probability of negative impacts on subsequent applications.

The removal method applied to aluminum electrode sheet with oxide layer of the disclosure includes a soaking step. The soaking step includes soaking the aluminum electrode sheet in an ionic liquid to remove the oxide layer, such that the aluminum electrode sheet has an exposed part of aluminum metal, and the soaking step is performed in a nitrogen atmosphere.

In an embodiment of the disclosure, the oxide layer is corroded to produce the exposed part of aluminum metal.

In an embodiment of the disclosure, a water/oxygen content in the nitrogen atmosphere is less than 100 ppm.

In an embodiment of the disclosure, a removal amount of the oxide layer is positively correlated with a soaking time of the the soaking step.

In an embodiment of the disclosure, the ionic liquid includes aluminum halide and imidazolium chloride.

In an embodiment of the disclosure, a usage amount of the aluminum halide is greater than or equal to a usage amount of the imidazolium chloride.

In an embodiment of the disclosure, a molar ratio of the aluminum halide to the imidazolium chloride is between 1 and 2.

In an embodiment of the disclosure, the aluminum halide includes aluminum chloride.

In an embodiment of the disclosure, the imidazolium chloride includes 1-ethyl-3-methylimidazolium chloride (EMIC) or 1-butyl-3-methylimidazolium chloride (BMIC).

In an embodiment of the disclosure, the soaking step further employs a heating step, a stirring step, an oscillation step, or a combination of the foregoing.

Based on the above, by performing the soaking step using the ionic liquid in the nitrogen atmosphere, in the removal method applied to the aluminum electrode sheet with the oxide layer of the disclosure, it is avoided to place the aluminum electrode sheet in an acidic solution and atmospheric environment, thereby effectively removing the oxide layer from the aluminum electrode sheet while reducing the probability of negative impacts on subsequent applications.

In order to make the above-mentioned features and advantages of the disclosure comprehensible, embodiments accompanied with drawings are described in detail below.

### BRIEF DESCRIPTION OF THE DRAWINGS

FIG. 1A is a schematic view of an aluminum electrode sheet with an oxide layer in an embodiment of the disclosure undergoing a soaking step for 24 hours.
FIG. 1B is a schematic view of an aluminum electrode sheet with an oxide layer in an embodiment of the disclosure undergoing a soaking step for 48 hours.
FIG. 1C is a schematic view of an aluminum electrode sheet with an oxide layer in some embodiments of the disclosure that has not yet undergone a soaking step.
FIG. 1D and FIG. 1E are schematic views of the aluminum electrode sheet in FIG. 1C undergoing a soaking step for 24 hours at different molar ratios of aluminum halide and imidazolium chloride.
FIG. 2 is a schematic view of Raman spectra for a soaking time of 0 hours and a soaking time of 48 hours for an aluminum electrode sheet with an oxide layer in an embodiment of the disclosure.

### DESCRIPTION OF THE EMBODIMENTS

The embodiments of the disclosure are described in detail below. However, the embodiments are illustrative, and the disclosure is not limited thereto but is defined by the scope of the patent claims.

Unless otherwise defined, all terms (including technical and scientific terms) used herein have the same meaning as commonly understood by one of ordinary skill in the art to which this disclosure belongs. It should be further understood that terms (such as those defined in commonly used dictionaries) should be construed as having meanings consistent with their meanings in the context of the related art, and are not to be construed as idealized or excessive formal meaning, unless expressly defined as such herein.

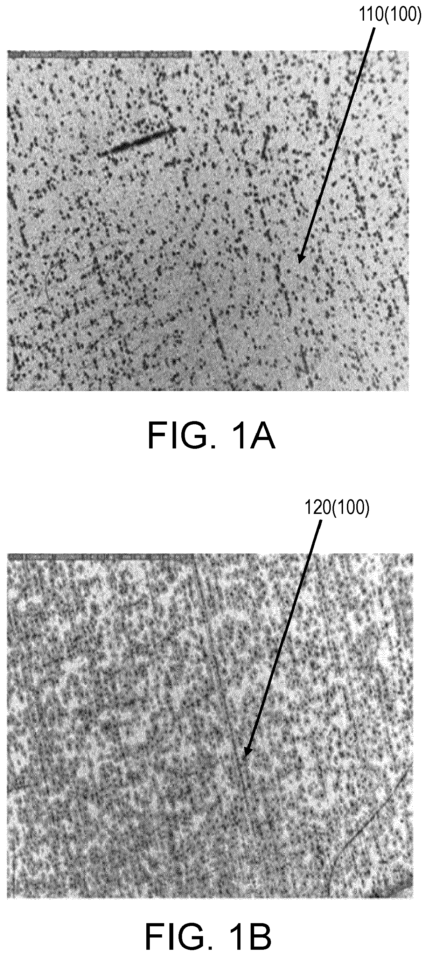

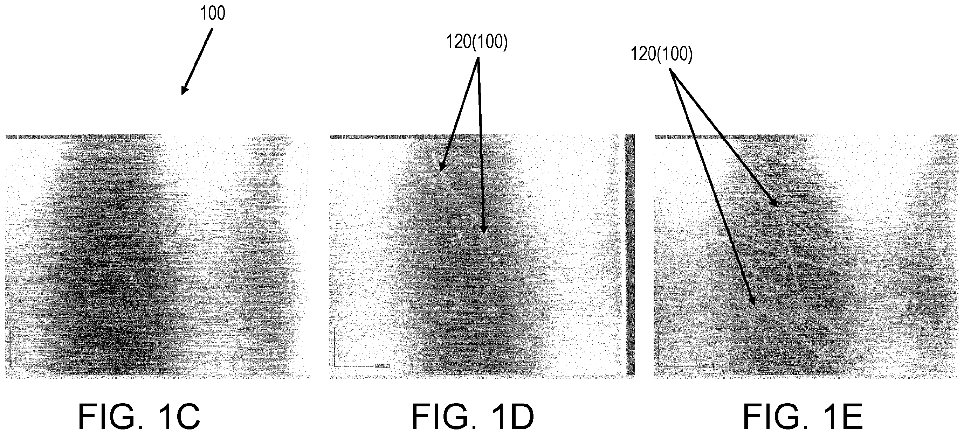

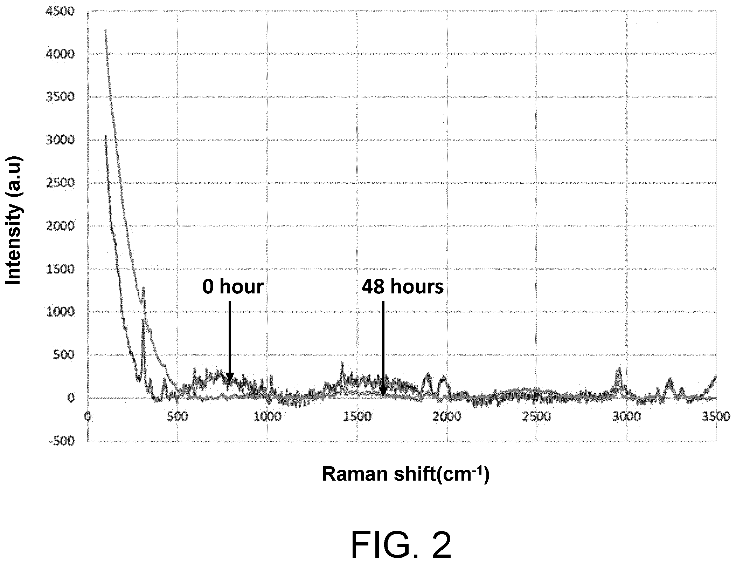

FIG. 1A is a schematic view of an aluminum electrode sheet with an oxide layer in an embodiment of the disclosure undergoing a soaking step for 24 hours. FIG. 1B is a schematic view of an aluminum electrode sheet with an oxide layer in an embodiment of the disclosure undergoing a soaking step for 48 hours. FIG. 1C is a schematic view of an aluminum electrode sheet with an oxide layer in some embodiments of the disclosure that has not yet undergone a soaking step. FIG. 1D and FIG. 1E are schematic views of the aluminum electrode sheet in FIG. 1C undergoing a soaking step for 24 hours at different molar ratios of aluminum halide and imidazolium chloride. FIG. 2 is a schematic view of Raman spectra for a soaking time of 0 hours and a soaking time of 48 hours for an aluminum electrode sheet with an oxide layer in an embodiment of the disclosure. FIG. 1A and FIG. 1B are images obtained using a digital microscope (X50). Moreover, the experimental conditions include, for example, an ionic liquid with a molar ratio of aluminum halide to imidazolium chloride of 1.8:1, a stirring temperature of 60°C, and times of 24 hours (FIG. 1A) and 48 hours (FIG. 1B). In FIG. 1D and FIG. 1E, the aluminum halide used is aluminum chloride (AlCl₃), and the imidazolium chloride is 1-ethyl-3-methylimidazolium chloride (EMIC), with molar ratios of the aluminum halide to the imidazolium chloride being 1.3:1 and 1.8:1, respectively. It should be noted that other unexplained contents should be obtained and adjusted by persons skilled in the art based on any content within the spirit and scope covered by the accompanying patent claims.

Referring to FIG. 1A, FIG. 1B, and FIG. 2, in this embodiment, the removal method applied to an aluminum electrode sheet 100 with an oxide layer 110 includes a soaking step. The soaking step includes soaking the aluminum electrode sheet 100 in an ionic liquid (not shown) to remove the oxide layer 110 (the light-colored region in FIG. 1A and FIG. 1B), such that the aluminum electrode sheet 100 has an exposed part 120 of aluminum metal (the dark-colored region in FIG. 1A and FIG. 1B), and the soaking step is performed in a nitrogen atmosphere. It should be noted that the aluminum electrode sheet 100 may be formed by aluminum metal and the oxide layer 110 formed on a surface thereof. Thus, when removing the oxide layer 110, the underlying aluminum metal is exposed, thereby forming the exposed part 120 of aluminum metal.

Accordingly, by performing the soaking step using the ionic liquid in the nitrogen atmosphere, in the removal method applied to the aluminum electrode sheet 100 with the oxide layer 110 of this embodiment, it is avoided to place the aluminum electrode sheet 100 in an acidic solution and atmospheric environment, thereby effectively removing the oxide layer 110 from the aluminum electrode sheet 100 while reducing the probability of negative impacts on subsequent applications (e.g., being placed in an aluminum battery). In this case, the oxide layer 110 is, for example, corroded to produce the exposed part 120 of aluminum metal, but the disclosure is not limited thereto.

Furthermore, the removal method of this embodiment is performed in a nitrogen atmosphere (e.g., in a glove box where the atmosphere may be effectively controlled). Thus, repeated oxidation of the aluminum metal in the atmospheric environment may be avoided, and the oxide layer 110 may be effectively removed from the aluminum electrode sheet 100. Moreover, since no acidic solution (e.g., hydrochloric acid, sulfuric acid, nitric acid, etc.) is used for surface treatment, there is no residual moisture, which may reduce the probability of negative impacts on subsequent applications.

In some embodiments, a water/oxygen content in the nitrogen atmosphere is less than 100 ppm (e.g., 90ppm, 70ppm, 50ppm, 30ppm, 10ppm, 1ppm, or any value less than 100 ppm). Under this controlled condition, the probability of repeated oxidation of aluminum metal may be further reduced, but the disclosure is not limited thereto.

In some embodiments, since there is a spontaneous reaction between the ionic liquid and the oxide layer, the more soaking time, the more reaction amount and area. That is, the longer the soaking time, the more removal amount of the oxide layer. Thus, the removal amount of the oxide layer is positively correlated with the soaking time of the soaking step. For example, as shown in FIG. 1A and FIG. 1B, in response to the soaking time reaching 48 hours, most of the oxide layer 110 on the surface of the aluminum electrode sheet 100 has been obviously removed, but the disclosure is not limited thereto.

In some embodiments, the ionic liquid includes aluminum halide and imidazolium chloride. For example, the aluminum halide includes aluminum chloride (AlCl₃), and the imidazolium chloride includes 1-ethyl-3-methylimidazolium chloride (EMIC) or 1-butyl-3-methylimidazolium chloride (BMIC). The aforementioned ionic liquid generates AlCl₄⁻, Al₂Cl₇⁻, EMI⁺/BMI⁺, Al₃⁺, Al⁺, and complexes of the above ions. In addition, since Al₂Cl₇⁻ reacts with the oxide layer 110, the more Al₂Cl₇⁻ generated, the better the removal effect, but the disclosure is not limited thereto.

In some embodiments, a usage amount of the aluminum halide is greater than or equal to a usage amount of the imidazolium chloride, and a molar ratio of the aluminum halide to the imidazolium chloride is between 1 and 2 (e.g., aluminum halide:imidazolium chloride = 1:1, aluminum halide:imidazolium chloride = 1.2:1, aluminum halide:imidazolium chloride = 1.4:1, aluminum halide:imidazolium chloride = 1.6:1, aluminum halide:imidazolium chloride = 1.8:1, aluminum halide:imidazolium chloride = 2:1, or any molar ratio within the above mentioned range), but the disclosure is not limited thereto.

In some embodiments, the higher the molar ratio of the aluminum halide to the imidazolium chloride, the better the removal effect. For example, as shown in FIG. 1C and FIG. 1D, after soaking the aluminum electrode sheet 100 in a solution with a molar ratio of the aluminum halide to the imidazolium chloride of 1.3:1 for 24 hours, a partially gray-white rust-like exposed part 120 of aluminum metal is presented at the position indicated by the arrow. In comparison, as shown in FIG. 1C and FIG. 1E, after soaking the aluminum electrode sheet 100 in a solution with a molar ratio of the aluminum halide to the imidazolium chloride of 1.8:1 for 24 hours, a more significant gray-white rust-like strip-shaped exposed part 120 of aluminum metal is presented at the position indicated by the arrow, but the disclosure is not limited thereto.

In addition, it is inferred from the Raman spectra that the removal method of this embodiment may effectively remove the oxide layer 110 on the aluminum electrode sheet 100. For example, during the soaking step, in response to the aluminum halide being aluminum chloride (AlCl₃) and the imidazolium chloride including 1-ethyl-3-methylimidazolium chloride (EMIC), Al₂Cl₇⁻ reacts with the oxide layer 110. Thus, as the soaking time increases, the amount of AlCl₄⁻ increases, and Al₂Cl₇⁻ decreases. That is, the ratio between AlCl₄⁻ and Al₂Cl₇⁻ increases, and the molar ratio of the aluminum chloride to the 1-ethyl-3-methylimidazolium chloride (referred to as an AE ratio) decreases. This trend may prove that the oxide layer 110 on the surface of the aluminum electrode sheet 100 has been effectively removed. As shown in FIG. 2 and Table 1, initially, in response to the aluminum electrode sheet 100 being soaked in the ionic liquid with an AE ratio of 1.8 (corresponding to a soaking time of 0 hours) and after 48 hours of soaking, the ratio between AlCl₄⁻ and Al₂Cl₇⁻ increases, and the AE ratio decreases, but the disclosure is not limited thereto.

**Table 1**

| Soaking Time | Raman Peak | | | AE Ratio |
|---|---|---|---|---|
| | AlCl₄⁻ | Al₂Cl₇⁻ | Ratio (ACl₄⁻/Al₂Cl₇⁻) | |
| 0 hours | 224 | 908.76 | 0.25 | 1.8 |
| 48 hours | 797.54 | 1287.46 | 0.62 | 1.65 |

In some embodiments, the soaking step further employs a heating step, a stirring step, an oscillation step, or a combination of the foregoing to enhance the removal efficiency. For example, the heating step, the stirring step, and the oscillation step may be added at any time during the soaking step (start of soaking, middle of soaking, or end of soaking). Moreover, one or more of the heating step, the stirring step, and the oscillation step may be used, such as using the heating step, the stirring step, or the oscillation step alone, or using a combination of the heating step and the stirring step, a combination of the stirring step and the oscillation step, a combination of the heating step and the oscillation step, or a combination of the heating step, the stirring step, and the oscillation step. When using the steps mentioned above, each may be introduced into the soaking step simultaneously or at different times, which is not limited by the disclosure.

In some embodiments, the higher the temperature of the heating step (e.g., higher than 60°C), and the longer the duration of the stirring step or the oscillation step (e.g., more than 24 hours), the more effective the removal of the oxide layer 110 may be achieved. However, the disclosure is not limited thereto.

To sum up, by performing the soaking step using the ionic liquid in the nitrogen atmosphere, in the removal method applied to the aluminum electrode sheet with the oxide layer of the disclosure, it is avoided to place the aluminum electrode sheet in an acidic solution and atmospheric environment, thereby effectively removing the oxide layer from the aluminum electrode sheet while reducing the probability of negative impacts on subsequent applications.

## Claims

1. A removal method, applied to an aluminum electrode sheet (100) with an oxide layer (110), comprising:
a soaking step, wherein the soaking step comprises soaking the aluminum electrode sheet (100) in an ionic liquid to remove the oxide layer (110), such that the aluminum electrode sheet (100) has an exposed part (120) of aluminum metal, and the soaking step is performed in a nitrogen atmosphere.

2. The removal method according to claim 1, wherein the oxide layer (110) is corroded to produce the exposed part (120) of aluminum metal.

3. The removal method according to claim 1, wherein a water/oxygen content in the nitrogen atmosphere is less than 100 ppm.

4. The removal method according to claim 1, wherein a removal amount of the oxide layer (110) is positively correlated with a soaking time of the soaking step.

5. The removal method according to claim 1, wherein the ionic liquid comprises aluminum halide and imidazolium chloride.

6. The removal method according to claim 5, wherein a usage amount of the aluminum halide is greater than or equal to a usage amount of the imidazolium chloride.

7. The removal method according to claim 5, wherein a molar ratio of the aluminum halide to the imidazolium chloride is between 1 and 2.

8. The removal method according to claim 5, wherein the aluminum halide comprises aluminum chloride.

9. The removal method according to claim 5, wherein the imidazolium chloride comprises 1-ethyl-3-methylimidazolium chloride or 1-butyl-3-methylimidazolium chloride.

10. The removal method according to claim 1, wherein the soaking step further employs a heating step, a stirring step, an oscillation step, or a combination of the foregoing.
